# FASCICULE DE BREVET EUROPEEN

(11) **EP 3 344 487 B1**
(45) Date de publication et mention de la délivrance du brevet: **11.09.2019**
(21) Numéro de dépôt: 16757299.9
(22) Date de dépôt: 21.07.2016
(51) Int. Cl.: B60L 3/00, B32B 15/00, B60R 13/08, H01B 7/08

(54) **DISPOSITIF DE PROTECTION POUR CÂBLES D'ALIMENTATION D'UN GROUPE MOTOPROPULSEUR ÉLECTRIQUE**
VORRICHTUNG ZUM SCHUTZ VON STROMKABELN EINES ELEKTRISCHEN ANTRIEBSSTRANGS
DEVICE FOR PROTECTING POWER CABLES OF AN ELECTRICAL POWERTRAIN

(30) Priorité: 04.09.2015 FR 1558217
(43) Date de publication de la demande: 11.07.2018
(73) Titulaire: Renault S.A.S., 92100 Boulogne-Billancourt (FR)
(72) Inventeur: LEBIGRE, Richard, 76100 Rouen (FR)
(86) Numéro de dépôt international: PCT/FR2016/051898
(87) Numéro de publication internationale: WO 2017/037355

(56) Documents cités:
- CN-U- 203 307 773
- DE-A1- 19 849 366
- JP-A- 2000 320 528
- JP-A- 2008 179 294
- US-A1- 2010 086 766
- US-A1- 2010 185 107

## Description

La présente invention se rapporte de manière générale au domaine de la mécanique et plus précisément à un dispositif de protection des câbles haute tension d'un groupe motopropulseur électrique, dans un véhicule.

Un véhicule électrique ou hybride possède un groupe motopropulseur électrique alimenté par une batterie de traction telle qu'une batterie Lithium-Ion, d'un voltage de l'ordre de 400V, assurant l'alimentation « haute tension » du véhicule par opposition au réseau de bord « basse tension » du véhicule alimenté en 14V par une batterie de servitude. Les câbles d'alimentation du groupe motopropulseur électrique, que ce soit entre la batterie de traction et un onduleur alimentant en triphasé le moteur électrique du groupe motopropulseur, ou entre l'onduleur et le moteur électrique, ou entre d'autres éléments haute tension du véhicule, doivent être protégés. Notamment en cas d'accident endommageant le véhicule, les câbles haute tension ne doivent pas être abîmés ou facilement accessibles afin de protéger un intervenant contre les risques de choc électrique.

Il existe des mécanismes tels que l'ouverture d'urgence des relais de la batterie de traction pour l'isoler électriquement du reste du véhicule. Certains éléments haute tension du véhicule tels que la capacité de lissage de l'onduleur restant chargés, un mécanisme de décharge passive de ces éléments existe également. Cependant cette décharge passive, automatique, prend un certain temps pendant lequel un intervenant peut s'électrocuter.

De plus, certains dispositifs de protection empêchent aux connecteurs et câbles haute tension d'être touchés par des chocs violents. Ainsi le document FR2983360 propose un dispositif de protection empêchant les connecteurs haute tension d'un carter d'électronique de puissance d'un véhicule électrique d'être endommagés lors d'un choc frontal sur le véhicule.

Néanmoins en cas de choc violent sur un véhicule électrique, amenant celui-ci à se renverser par exemple, certains câbles d'alimentation haute tension du groupe motopropulseur du véhicule initialement hors de portée d'un utilisateur peuvent devenir facilement accessibles à celui-ci, notamment en fonction de la déformation de la caisse du véhicule autour du groupe motopropulseur.

Un des buts de l'invention est de remédier à au moins une partie des inconvénients de la technique antérieure en fournissant un dispositif de protection pour câbles d'alimentation d'un groupe motopropulseur électrique, qui permette de rendre ces câbles difficilement accessibles pour un utilisateur même après un choc violent modifiant la situation et l'environnement du groupe motopropulseur.

A cette fin, l'invention propose un dispositif de protection pour câbles d'alimentation électrique connectant un premier élément d'un groupe motopropulseur électrique d'un véhicule à un deuxième élément dudit groupe motopropulseur électrique, ledit dispositif de protection comportant des premiers moyens de fixation audit premier élément, ledit dispositif de protection étant caractérisé en ce qu'il comporte en outre :
- des deuxièmes moyens de fixation audit deuxième élément,
- une paroi apte à englober lesdits câbles d'alimentation dans un volume s'étendant entre ladite paroi et ledit groupe motopropulseur,
- ladite paroi comportant une zone déformable apte à se déformer longitudinalement entre lesdits premiers moyens de fixation et lesdits seconds moyens de fixation.

Grâce à l'invention, les câbles d'alimentation du groupe motopropulseur électrique entre deux éléments de celui-ci restent non directement accessibles à un intervenant même en cas de retournement du véhicule et/ou de déformation de la liaison mécanique entre ces deux éléments suite à un choc violent sur le véhicule.

Selon une caractéristique avantageuse du dispositif de protection selon l'invention, ladite zone déformable comporte un treillis alvéolaire en caoutchouc à haute résistance élastique. L'utilisation d'un treillis alvéolaire dans cette matière permet d'absorber efficacement les différences de position entre les deux éléments du groupe motopropulseur en cas de choc.

Selon une autre caractéristique avantageuse du dispositif de protection selon l'invention, ladite paroi comporte une armature métallique comportant des points fusibles au niveau de ladite zone déformable. L'armature métallique assure la bonne rigidité mécanique du dispositif de protection, les points fusibles permettant à la zone déformable de se déformer malgré cette rigidité.

Selon encore une autre caractéristique avantageuse du dispositif de protection selon l'invention, ladite paroi est convexe ou comporte au moins une partie périphérique courbée vers ledit groupe motopropulseur. Cette disposition de la paroi permet de rendre les câbles moins accessibles à des débris ou des outils qui pourraient autrement se glisser entre le dispositif et le groupe motopropulseur. Une telle conception du dispositif selon l'invention minimise également son encombrement.

Préférentiellement, lesdits premiers et deuxièmes moyens de fixation comportent chacun au moins une agrafe apte à se clipser dans une nervure dudit premier ou deuxième élément dudit groupe motopropulseur électrique. Ce choix de moyens de fixation permet d'utiliser le dispositif de protection sur un groupe motopropulseur existant sans avoir à modifier celui-ci, les carters des éléments de groupes motopropulseurs comportant souvent des nervures de rigidification. De plus les agrafes présentent l'avantage de pouvoir être moulées en même temps que la paroi du dispositif de protection, rendant celui-ci peu coûteux.

L'invention concerne aussi un groupe motopropulseur électrique d'un véhicule électrique ou hybride, comportant un carter d'électronique de puissance et un moteur électrique de traction reliés électriquement par des câbles d'alimentation électrique, caractérisé en ce qu'il comporte un dispositif de protection selon l'invention, ledit premier élément étant ledit carter d'électronique de puissance et ledit deuxième élément étant ledit moteur électrique.

Le groupe motopropulseur électrique selon l'invention présente des avantages analogues à ceux du dispositif de protection selon l'invention.

D'autres caractéristiques et avantages apparaîtront à la lecture d'un mode de réalisation préféré décrit en référence aux figures dans lesquelles:
- la figure 1 représente un groupe motopropulseur électrique selon l'invention, dans ce mode de réalisation préféré,
- la figure 2 représente un dispositif de protection selon l'invention, dans ce mode de réalisation préféré,
- et la figure 3 représente la déformation d'une partie du dispositif de protection selon l'invention, dans ce mode de réalisation préféré.

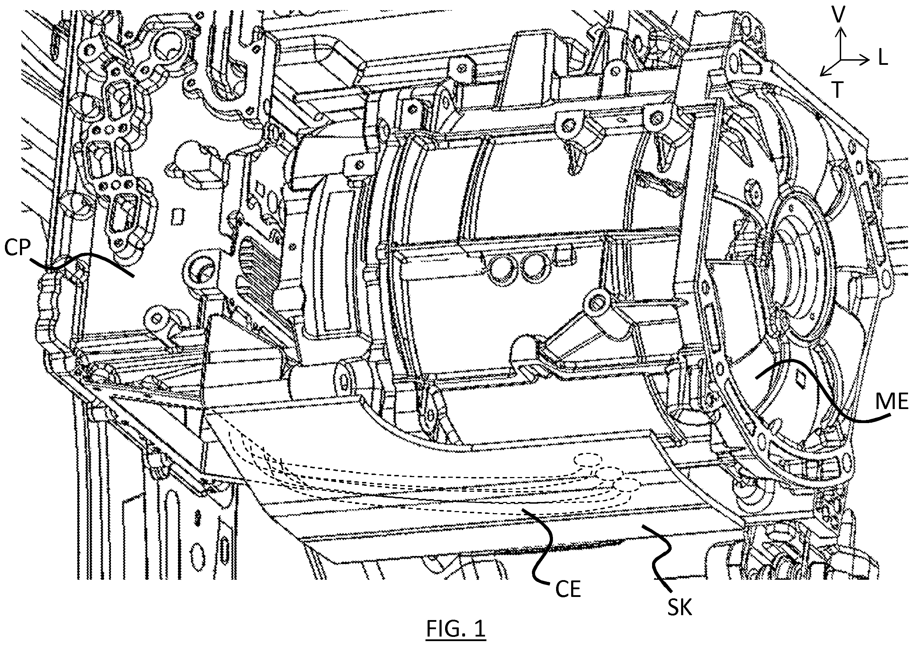

Selon un mode de réalisation préféré de l'invention, représenté à la **figure 1****,** un groupe motopropulseur d'un véhicule électrique ou hybride comporte un moteur électrique ME, et un carter d'électronique de puissance CP. Le carter d'électronique de puissance CP abrite un onduleur de traction, qui en roulage transforme le courant continu fourni par une batterie de traction du véhicule, en un courant triphasé. Ce courant triphasé est transmis au moteur électrique ME de traction à travers les câbles d'alimentation électrique CE. Les câbles d'alimentation électrique CE sortent du carter d'électronique de puissance CP et sont connectés extérieurement à une entrée du moteur électrique ME.

Dans ce mode de réalisation de l'invention, le groupe motopropulseur électrique est monté dans le compartiment avant du véhicule. La direction longitudinale L, longitudinale au moteur électrique ME, s'étend sur la largeur du véhicule, tandis que la direction transversale T, transversale au moteur électrique ME, s'étend sur la longueur du véhicule c'est-à-dire dans le sens du roulage. Le groupe motopropulseur électrique est donc vulnérable aux chocs frontaux. Les câbles électriques CE étant situés sous le groupe motopropulseur électrique, c'est-à-dire en bas du compartiment moteur qui s'étend verticalement selon la direction verticale V, ils se retrouvent au-dessus de celui-ci en cas de retournement du véhicule.

Un dispositif de protection SK selon l'invention est fixé sous le groupe motopropulseur de manière à couvrir les câbles d'alimentation CE dans les directions longitudinale L et transversale T. Ainsi lors d'un retournement du véhicule, les câbles d'alimentation CE entre le groupe motopropulseur et le dispositif de protection SK, sont inaccessibles directement à un intervenant.

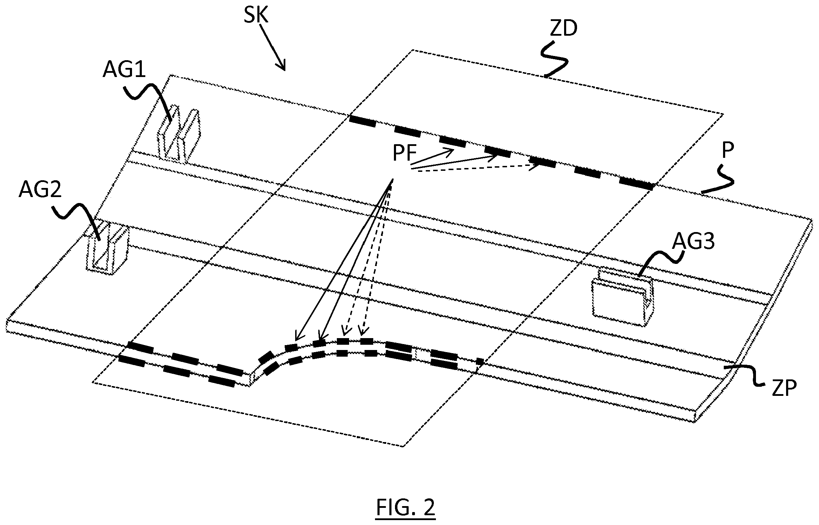

En référence à la **figure 2****,** le dispositif de protection SK selon l'invention est représenté plus en détails. Il comporte une paroi P formant une surface s'étendant selon les directions longitudinale et transversale, apte à englober les câbles d'alimentation électrique CE dans un volume s'étendant entre la paroi P et le groupe motopropulseur électrique.

La paroi P comporte une pliure ZP longitudinale qui donne une forme courbée à la paroi P lui permettant de suivre grossièrement la forme cylindrique que présente le dessous du groupe motopropulseur électrique.

La paroi P comporte longitudinalement trois zones distinctes :
- Une première zone apte à se fixer sous le carter d'électronique de puissance CP comporte deux agrafes champ de tôle AG1 et AG2. Les agrafes AG1 et AG2 se clipsent dans une nervure du carter d'électronique de puissance CP, cette nervure s'étendant dans la direction transversale T. Ces agrafes AG1 et AG2 sont des griffes de métal en forme de U recouvertes de plastique.
- Une deuxième zone ZD est une zone déformable dans la direction longitudinale L, formée d'un treillis alvéolaire en caoutchouc à haute résistance élastique. On appelle ici haute résistance élastique une résistance permettant à la zone déformable ZD de se déformer sans rompre.
- Une troisième zone apte à se fixer sous le carter du moteur électrique ME, comporte des moyens de fixation formés d'une agrafe AG3 champ de tôle. L'agrafe AG3 se clipse dans une nervure du carter du moteur électrique ME, cette nervure s'étendant dans la direction longitudinale L. L'agrafe AG3 est également une griffe métallique en forme de U recouverte de plastique.

Les première et troisième zones sont composées d'aluminium.

La paroi P comporte une armature métallique réalisée par exemple en aluminium, lui conférant rigidité et forme.

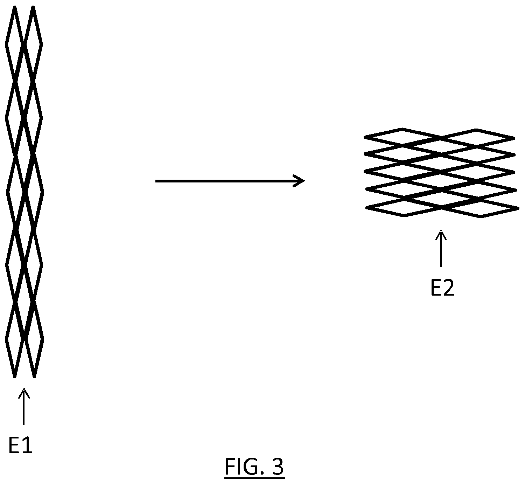

La **figure 3** montre la déformation longitudinale de la zone déformable ZD en cas de choc sur le véhicule, étirant la liaison mécanique entre le carter d'électronique de puissance CP et le moteur électrique ME.

Dans un état initial E1, avant le choc, les alvéoles du treillis alvéolaire de la zone déformable ZD forment des losanges aplatis dans la direction transversale T.

Dans un état E2 après le choc, les alvéoles du treillis alvéolaire forment des losanges aplatis dans la direction longitudinale T. Les alvéoles se sont donc étirées longitudinalement pendant le choc, et aplaties transversalement. La zone déformable ZD du dispositif de protection SK s'est donc globalement étirée longitudinalement et aplatie transversalement, suivant la déformation de la liaison mécanique entre le carter d'électronique de puissance CP et le carter du moteur électrique ME pendant le choc.

Afin de permettre cette déformation, l'armature métallique de la paroi P du dispositif de protection SK comporte des points de restriction faisant office de points fusibles PF sur le pourtour latéral de la zone ZD en caoutchouc.

Il est à noter que bien que dans ce mode de réalisation, le dispositif de protection selon l'invention ait la forme simple d'un ski de protection avec agrafes, d'autres implémentations de l'invention sont possibles, dans lesquelles par exemple les moyens de fixations sont vissés, ou dans lesquelles d'autres matériaux sont utilisés, ou encore dans lesquelles la paroi du dispositif de protection a une forme plus complexe. De plus, le dispositif de protection selon l'invention est utilisable sur d'autres éléments du groupe motopropulseur, par exemple pour protéger les câbles d'alimentation électrique arrivant en entrée du carter d'électronique de puissance.

## Revendications

1. Dispositif de protection (SK) pour câbles d'alimentation électrique (CE) connectant un premier élément (CP) d'un groupe motopropulseur électrique d'un véhicule à un deuxième élément (ME) dudit groupe motopropulseur électrique, ledit dispositif de protection (SK) comportant des premiers moyens de fixation (AG1, AG2) audit premier élément (CP), ledit dispositif de protection (SK) étant **caractérisé en ce qu'**il comporte en outre :
- des deuxièmes moyens de fixation (AG3) audit deuxième élément (ME),
- une paroi (P) apte à englober lesdits câbles d'alimentation (CE) dans un volume s'étendant entre ladite paroi (P) et ledit groupe motopropulseur,
- ladite paroi (P) comportant une zone déformable (ZD) apte à se déformer longitudinalement entre lesdits premiers moyens de fixation (AG1, AG2) et lesdits seconds moyens de fixation (AG3).

2. Dispositif de protection (SK) selon la revendication 1, **caractérisé en ce que** ladite zone déformable (ZD) comporte un treillis alvéolaire en caoutchouc à haute résistance élastique.

3. Dispositif de protection (SK) selon la revendication 1 ou 2, **caractérisé en ce que** ladite paroi (P) comporte une armature métallique comportant des points fusibles (PF) au niveau de ladite zone déformable (ZD).

4. Dispositif de protection (SK) selon l'une quelconque des revendications 1 à 3, **caractérisé en ce que** ladite paroi (P) est convexe ou comporte au moins une partie périphérique courbée vers ledit groupe motopropulseur.

5. Dispositif de protection (SK) selon l'une quelconque des revendications 1 à 4, dans lequel lesdits premiers et deuxièmes moyens de fixation comportent chacun au moins une agrafe (AG1, AG2, AG3) apte à se clipser dans une nervure dudit premier (CP) ou deuxième élément (ME) dudit groupe motopropulseur électrique.

6. Groupe motopropulseur électrique d'un véhicule électrique ou hybride, comportant un carter d'électronique de puissance (CP) et un moteur électrique (ME) de traction reliés électriquement par des câbles d'alimentation électrique (CE), **caractérisé en ce qu'**il comporte un dispositif de protection (SK) selon l'une quelconque des revendications 1 à 5, ledit premier élément étant ledit carter d'électronique de puissance (CP) et ledit deuxième élément étant ledit moteur électrique (ME).

## Patentansprüche

1. Schutzvorrichtung (SK) für Stromversorgungskabel (CE), die ein erstes Element (CP) eines elektrischen Antriebsstrangs eines Fahrzeugs mit einem zweiten Element (ME) des elektrischen Antriebsstrangs verbinden, wobei die Schutzvorrichtung (SK) erste Befestigungsmittel (AG1, AG2) an dem ersten Element (CP) aufweist, wobei die Schutzvorrichtung (SK) **dadurch gekennzeichnet ist, dass** sie ferner Folgendes aufweist:
- zweite Befestigungsmittel (AG3) an dem zweiten Element (ME),
- eine Wand (P), die geeignet ist, die Stromversorgungskabel (CE) in einem Volumen einzuschließen, das sich zwischen der Wand (P) und dem Antriebsstrang erstreckt,
- wobei die Wand (P) einen verformbaren Bereich (ZD) aufweist, der geeignet ist, sich in Längsrichtung zwischen den ersten Befestigungsmitteln (AG1, AG2) und den zweiten Befestigungsmitteln (AG3) zu verformen.

2. Schutzvorrichtung (SK) nach Anspruch 1, **dadurch gekennzeichnet, dass** der verformbare Bereich (ZD) ein wabenförmiges Gitter aus Gummi mit hohem elastischen Widerstand aufweist.

3. Schutzvorrichtung (SK) nach Anspruch 1 oder 2, **dadurch gekennzeichnet, dass** die Wand (P) eine Metallarmierung aufweist, die Verformungspunkte (PF) an dem verformbaren Bereich (ZD) aufweist.

4. Schutzvorrichtung (SK) nach einem der Ansprüche 1 bis 3, **dadurch gekennzeichnet, dass** die Wand (P) konvex ist oder mindestens einen Umfangsabschnitt aufweist, der zu dem Antriebsstrang hin gekrümmt ist.

5. Schutzvorrichtung (SK) nach einem der Ansprüche 1 bis 4, wobei die ersten und die zweiten Befestigungsmittel jeweils mindestens eine Klammer (AG1, AG2, AG3) aufweisen, die geeignet ist, in eine Rippe des ersten (CP) oder zweiten Elements (ME) des elektrischen Antriebsstrangs geklemmt zu werden.

6. Elektrischer Antriebsstrang eines Elektro- oder Hybridfahrzeugs, der ein Gehäuse für Leistungselektronik (CP) und einen Elektroantriebsmotor (ME) aufweist, die elektrisch durch Stromversorgungskabel (CE) verbunden sind, **dadurch gekennzeichnet, dass** er eine Schutzvorrichtung (SK) nach einem der Ansprüche 1 bis 5 aufweist, wobei das erste Element das Gehäuse für Leistungselektronik (CP) und das zweite Element der Elektromotor (ME) ist.

## Claims

1. Protection device (SK) for electrical supply cables (CE) connecting a first element (CP) of an electrical powertrain of a vehicle to a second element (ME) of said electrical powertrain, said protection device (SK) comprising first means (AG1, AG2) for fastening to said first element (CP), said protection device (SK) being **characterized in that** it further comprises:
- second means (AG3) for fastening to the second element (ME),
- a wall (P) that is able to surround said power cables (CE) in a volume extending between said wall (P) and said powertrain,
- said wall (P) comprising a deformable zone (ZD) that is able to deform longitudinally between said first fastening means (AG1, AG2) and said second fastening means (AG3).

2. Protection device (SK) according to Claim 1, **characterized in that** said deformable zone (ZD) comprises a cellular lattice made of rubber having high elastic strength.

3. Protection device (SK) according to Claim 1 or 2, **characterized in that** said wall (P) comprises a metal reinforcement comprising weak points (PF) at said deformable zone (ZD).

4. Protection device (SK) according to any one of Claims 1 to 3, **characterized in that** said wall (P) is convex or comprises at least one peripheral portion curved towards said powertrain.

5. Protection device (SK) according to any one of Claims 1 to 4, in which said first and second fastening means each comprise at least one clip (AG1, AG2, AG3) that is able to snap into a rib of said first (CP) or second element (ME) of said electrical powertrain.

6. Electrical powertrain for an electric or hybrid vehicle, comprising a power electronics casing (CP) and an electric drive motor (ME) that are electrically connected by electrical supply cables (CE), **characterized in that** it comprises a protection device (SK) according to any one of Claims 1 to 5, said first element being said power electronics casing (CP) and said second element being said electric motor (ME).
